# EUROPEAN PATENT APPLICATION

(11) **EP 3 383 065 A1**
(43) Date of publication of application: **03.10.2018**
(21) Application number: 18164724.9
(22) Date of filing: 28.03.2018
(51) Int. Cl.: H04R 5/02, G06F 3/01, H04R 9/06, H04R 1/02

(54) **HAPTIC DEVICE FOR REPRODUCING SOUND**

(30) Priority: 28.03.2017 US 201762477627 P; 21.12.2017 US 201761849857 P
(71) Applicant: Wooden Ear Company, LLC, Sandy, 84070 (US)
(72) Inventor: Fairbourn, Dave, Sandy, UT 84070 (US); Walker, Paul, Sandy, UT 84070 (US); Wetzker, Orlin, Sandy, UT 84070 (US)
(74) Representative: Eisenführ Speiser

(57) **Abstract**

A haptic device for reproducing sound is disclosed. The haptic device includes a main body, at least one processor, and at least one transducer. The processor is configured to generate a digital signal indicative of a specific frequency of an audio signal. The transducer is in communication with the processor and is configured to convert the frequency indicated by the digital signal from the at least one processor into a corresponding vibration. The transducer transmits the vibration to the main body of the haptic device.

## Description

### TECHNICAL FIELD

The invention generally relates to a haptic device for reproducing sound, and in particular to a haptic device that includes a main body and transducer configured to convert digital signals representing a specific audible frequency into vibration, where the vibration is transmitted to the main body.

### BACKGROUND

Multimedia equipment and systems typically provide audio and visual data to a user. In addition to audio and visual data, multimedia systems may also introduce other sensory stimuli as well. For example, many video games provide tactile stimulation in addition to generating video graphics and sound. In particular, some video games include tactile feedback, which is usually transmitted through a video game controller. As video games become more sophisticated and realistic, there is an increasing need to provide additional sensory features that may improve a user's overall gaming experience. One feature that may enhance a user's gaming experience is the ability to provide haptic stimulation based on the audio information generated by the video game. In addition to video gaming systems, there are a number of other multimedia systems where haptic stimulation may enhance a user's overall experience such as, for example, theater seating chairs.

In addition to enhancing a user's overall experience with multimedia equipment, there is also a need to provide audio-based haptic stimulation to individuals who are hearing-impaired. A hearing-impaired individual may refer to a person whose primary mode of accessing sound does not involve hearing noise through his or her ear canal. In at least some instances, a partially deaf individual may also be categorized as hearing-impaired as well, and depends on the level of the individual's hearing loss. Hearing-impaired individuals may still be able to enjoy music using one of their other senses. For example, in one approach, hearing-impaired individuals may sense music by feeling vibrations. As music is played, the vibrations created by the sound of music may be transmitted through physical objects such as walls, floors, or furniture. However, there are a limited number of products currently available that enhance a hearing-impaired individual's musical experience through haptic stimulation.

### BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.
FIG. 1 is an exemplary perspective view of the disclosed haptic device, where the haptic device is illustrated as a chair;
FIG. 2 is an exploded view of the chair shown in FIG. 1;
FIG. 3 is a rear view of the chair shown in FIG. 1, where a plurality of transducers are located upon back slats of the chair;
FIG. 4 is a schematic diagram of an electronics module of the chair illustrated in FIG. 1 in communication with the transducers shown in FIG. 3; and
FIG. 5 is a diagrammatic view of an exemplary computer system of FIG. 4.

### DETAILED DESCRIPTION

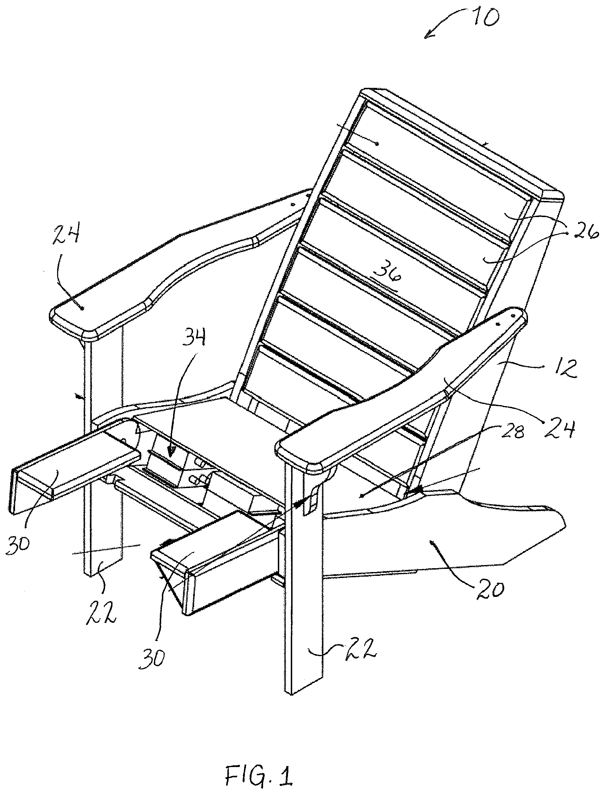

Referring now to FIG. 1, a haptic device 10 in accordance with an embodiment of the invention is illustrated. In the exemplary embodiment as shown in the figures, the haptic device 10 is illustrated as a chair 12. As explained in greater detail below, although the figures illustrate a chair, the haptic device 10 is not limited to a chair or even to a specific piece of furniture. The chair 12 may include a pair of opposing side members 20 (only one side member is visible in FIG. 1), a pair of opposing legs 22, a pair of opposing arms 24, one or more back slats 26, a bottom slat 28, a pair of calf rests 30, and an electronics module 34. The back slats 26 define a surface 36 for a user to rest his or her back against. In the exemplary embodiment as shown, the chair 12 includes six back slats 26, however it is to be appreciated that this illustration is merely exemplary in nature and any number of back slats 26 may be used.

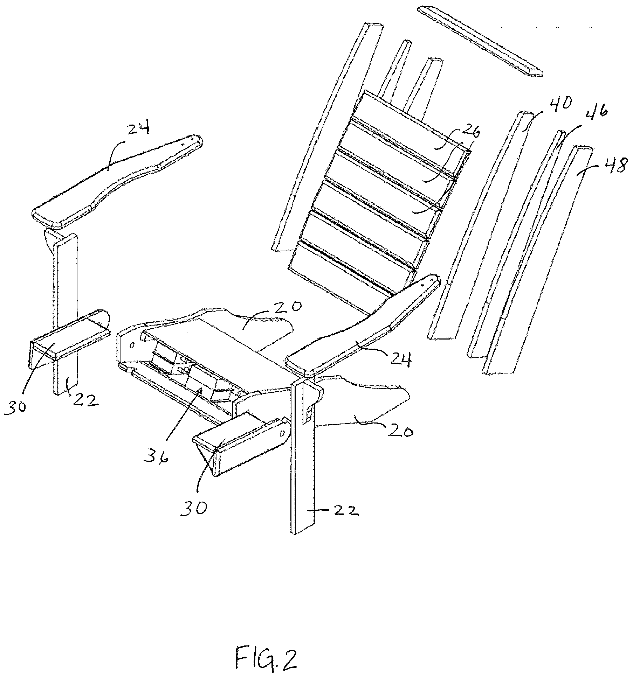

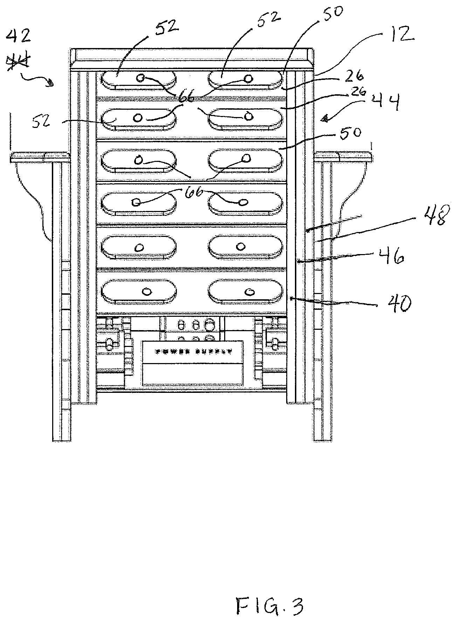

FIG. 2 is an exploded view of the chair 12, and FIG. 3 is a rear view of the chair 12. Referring to FIG. 3, a pair of inner back struts 40 may be located on opposing sides 42, 44 of the chair 12, and are used to secure the back slats 26. The chair 12 may also include a pair of middle back struts 46 and a pair of outer back struts 48, where the middle back struts 46 are each located in between a corresponding inner back strut 40 and a corresponding outer back strut 48. Referring to FIGS. 1 and 2, the calf rests 30 may each be rotatably connected to a corresponding side member 20 of the chair 12.

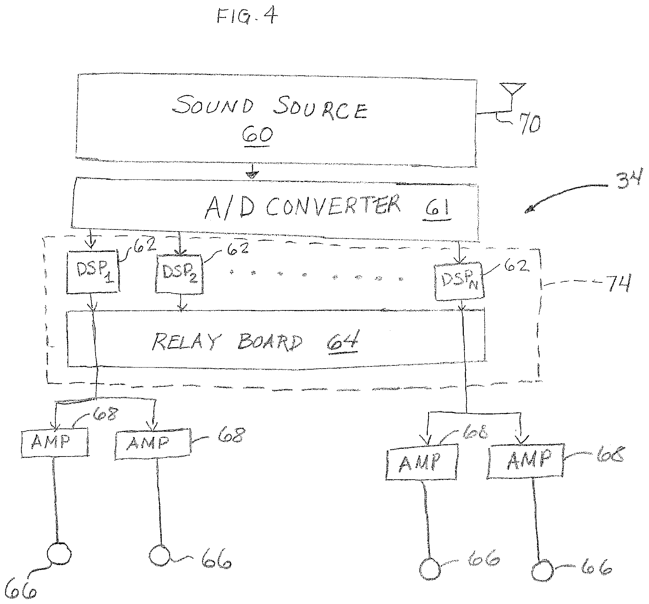

Referring to FIG. 3, a plurality of transducers 66 are situated in strategic locations upon the chair 12. As seen in FIG. 4, the transducers 66 are in communication with the electronics module 34. The transducers 66 may be any device configured to convert electrical signals into vibration, such as a dynamic moving-coil microphone sound transducer. Turning back to FIG. 3, two transducers 66 are situated along a rear surface 50 of each back slat 26 of the chair 12. Specifically, each back slat 26 includes an area 52 where the thickness of the back slat 26 has been reduced. A single transducer 66 is placed within each area 52 of the back slats 26. The area 52 of the back slat 26 includes an oval-shaped profile, however it is to be understood that the area 52 may be shaped into any number of other profiles as well.

The area 52 represents a portion of a corresponding back slat 26 that is reduced in thickness in order to more effectively transmit vibrations created by a corresponding transducer 66. Although only the back slats 26 are illustrated as including transducers placed within areas of reduced thickness in order to more effectively transmit vibration, it is to be appreciated that transducers may also be placed upon other components of the chair 12 as well. Moreover, other components of the chair 12 may also include areas of reduced thickness to more effectively transmit vibration as well. For example, an underside of each arm 24, which is not visible in the figures, may also include a transducer placed within an area of reduced thickness. Furthermore, the underside of the bottom slat 28, which is not visible in the figures, may also include one or more transducers placed within an area of reduced thickness as well. Although FIG. 3 illustrates the chair 12 as having the areas 52 of reduced thickness, it is to be appreciated that in another embodiment the areas 52 may be omitted.

The chair 12 defines a main body, which includes the side members 20, the legs 22, the arms 24, the back slats 26, the bottom slat 28, the calf rests 30, the back struts 40, the middle back struts 46, and the outer back struts 48. The main body of the chair 12 is constructed of one or more materials sufficiently flexible to transmit the vibrational forces generated by the transducers 66. For example, in one embodiment the main body of the chair 12 may be constructed of wood such as American Cherry or Sapele. In another embodiment, the main body of the chair 12 may be constructed of plastic such as, for example, polyvinyl chloride (PVC). Although the figures illustrate the chair 12 as an Adirondack style chair, the chair 12 may include various other styles or configurations as well. For example, the chair 12 may be a folding chair, a stadium chair, or a video gaming rocking chair.

As mentioned above, although the figures illustrate the haptic device 10 as a chair, it is to be appreciated that the haptic device 10 is not limited to a chair, or even to a specific piece of furniture. Instead, the haptic device 10 may be any type of object that a user may either wear, secure to his or her body, or rest his or her body upon. In one embodiment, the haptic device 10 may be a piece of furniture such as, for example, a bench. In another embodiment, the haptic device 10 may be a piece of clothing or other item that is wearable by a user such as, but not limited to, a vest, a wearable pad, or belt. In one particular embodiment, the haptic device 10 may be a belt having multiple pockets. Each pocket contains a single transducer. The pockets may be created by sewing or otherwise joining an elastic expandable material along the belt.

FIG. 4 is a schematic illustration of the electronics module 34 shown in FIG. 1 in communication with the transducers 66. Referring to FIGS. 1 and 4, the electronics module 34 may refer to, or be part of, an application specific integrated circuit (ASIC), an electronic circuit, a combinational logic circuit, a field programmable gate array (FPGA), a processor (shared, dedicated, or group) that executes code, or a combination of some or all of the above, such as in a system-on-chip. The electronics module 34 includes a sound source 60, an analog-to-digital (A/D) converter 61, a plurality of digital signal processors (DSPs) 62, a relay board 64, and a plurality of amplifiers 68.

In one embodiment, the sound source 60 may be a device that plays files that are stored on a data storage device. For example, the sound source may be a compact disk (CD) player that plays CDs. In another embodiment, the sound source 60 may be a device that wirelessly connects to another electronic device to stream the audio signals. For example, in one approach the sound source 60 may include an antenna element 70 configured to receive a short-range RF signal such as, for example, a BLUETOOTH® signal conforming to the Institute of Electrical and Electronics Engineers (IEEE) Standard 802.15. The wireless signal may be sent from an electronic device such as, for example, a smartphone, a laptop computer, or a tablet computer.

The sound source 60 transforms audio signals into an electric analog signal. The audio signals are in the audible range of hearing for a human, which range from about 4.09 Hertz (Hz) to about 20,000 Hz. The audio signal represents a specific frequency of audible sound. The frequency may be part of a musical composition, or representative of a noise heard when playing video games. For example, the frequency could represent the noise heard when a user fires a gun while playing the video game. The analog signal generated by the sound source 60 is an electric signal that is representative of the frequency of the audio signal. The analog signal generated by the sound source is sent to the A/D converter 61. The A/D converter 61 converts the analog signal into a corresponding digital signal.

The A/D converter 61 may then send the digital signal to the DSPs 62. In the embodiment as shown in FIG. 4, the electronic module 34 includes N DSPs 62, where N represents any number. The DSPs 62 are used to convert the digital signal from the sound source 60 into a format that indicates various characteristics of the sound pattern, such as a pitch of a musical note as well as the frequency or amplitude of the note. In one non-limiting embodiment, the DSPs 62 may convert the digital signal from the sound source 60 into a signal that is compatible with the Musical Instrument Digital Interface (MIDI) protocol. One commercially available example of a DSP device that may be used is the C6713 SigmaDSP® audio processor, which is available from Analog Devices of Norwood, Massachusetts. Another commercially available example of a DSP device that may be used is the miniDSP 2x4 kit, which is available from miniDSP of Kowloon, Hong Kong.

In the embodiment as shown in FIG. 4, the DSPs 62 are all located upon a single printed circuit board (PCB) 74. As explained below, it may be easier to re-assign frequencies to the transducers 66 if the DSPs 62 are all placed upon the same PCB 74. However, although FIG. 4 illustrates the DSPs 62 on the same PCB 74, in another embodiment the DSPs 62 may be single units as well. Each DSP 62 may be in communication with the relay board 64 and one or more amplifiers 68. The relay board 64 may be used to introduce other frequencies to the system that are not representative of sound. For example, the relay board 64 may be able to introduce frequencies such as touch, or smell.

In the embodiment as illustrated, the DSP 62 is in communication with two amplifiers 68, however it is to be appreciated that this illustration is exemplary in nature. Each amplifier 64 is in communication with a corresponding transducer 66. The transducers 66 convert the incoming digital signal at a specific frequency from a particular amplifier 64 into a vibration. The vibration generated by the transducer 66 vibrates at the specific frequency indicated by the digital signal. In one embodiment, the digital signal from the amplifier 64 may be representative of a musical note. For example, in one exemplary approach the digital signal indicates a specific frequency of middle C, which has a frequency of about 261.6 Hz. Accordingly, the transducer 66 generates a vibration or tactile stimulation that vibrates at a frequency which corresponds to the specific frequency indicated by the digital signal. In the present example, the transducer would vibrate at a frequency of about 261.6 Hz.

The note middle C played on one specific musical instrument will not sound the same as the same note played on another musical instrument. For example, middle C played on a trumpet does not sound the same as middle C played on a piano. This is because both instruments not only play the predominant frequency middle C, but also have unique side band frequencies which create the particular sound of a specific instrument. The side band frequencies include a lower amplitude than the predominant frequency. The side band frequencies are conveyed to an individual using one or more transducers 66 that are different from the transducer 66 conveying the predominant frequency.

Referring to both FIGS. 3 and 4, the vibration created by a specific one of the transducers 66 is transmitted to a specific portion of the main body of the chair 12. In the present example, if the transducer 66 is located on the uppermost back slat 26, on the left hand side, then the transducer 66 vibrates at a frequency of about 261.6 Hz. The vibration generated by the transducer 66 is transmitted to the main body of the chair 12. More specifically, the vibration generated by the specific transducer 66, which includes a frequency of about 261.6 Hz, is transmitted to the uppermost back slat 26 of the chair 12.

Referring to FIGS. 1 and 3, when an individual is seated on the chair 12, then he or she may experience the vibration generated by the specific transducer 66, which is transmitted through a portion of the chair 12. In the present example, when the transducer 66 is located on the uppermost back slat 26 of the chair on the left hand side, then the user feels the vibration on the upper part of his or her back. In particular, the user experiences a tactile stimulation of the musical note middle C, since the transducer 66 produces a vibration having a frequency of about 261.6 Hz. Although the present example describes the transducer 66 located on the left hand side of the uppermost back slat 26 vibrating at a frequency equivalent to middle C, in one embodiment the user may customize the chair 12 such that the vibration may be produced at other portions of the chair 12 as well.

Referring now to both FIGS. 1 and 4, in one embodiment the user may be able to customize the chair 12 based on his or her preferences. Specifically, a user may be able to choose where vibration at a particular frequency may be created. As seen in FIG. 4, in one embodiment the chair 12 may be equipped with a controller 90 having a user interface 92. The controller 90 is in communication with the DSPs 62, and allows for a user to customize the particular frequency that each transducer 66 is correlated to. For example, the transducer 66 located on the uppermost back slat 26 of the chair on the left hand side correlates to middle C. However, a user may wish to feel the vibration corresponding to middle C on another portion of his or her body. The user may wish to feel the note middle C on one of his legs or arms. Accordingly, the user may enter a new configuration into the controller 90 by the interface 92 to indicate that he would like to feel the vibration corresponding to middle C on another portion of his body. For example, the user may indicate that he would like to feel the vibration corresponding to middle C on his left calf. Accordingly, the transducer located on the left calf rest 30 may now vibrate at a frequency of about about 261.6 Hz, which correlates to middle C.

Referring generally to FIGS. 1-4, the disclosed haptic device provides tactile simulation corresponding to audible sounds. In one approach, the haptic device may be used in conjunction with multimedia equipment such as, for example, video games. In this approach, the haptic device may enhance a gamer's overall experience by providing tactile stimulation based on sounds generated by the video game. In another embodiment, the haptic device may be used to allow for hearing-impaired individuals to feel sounds such as music based on tactile stimulation.

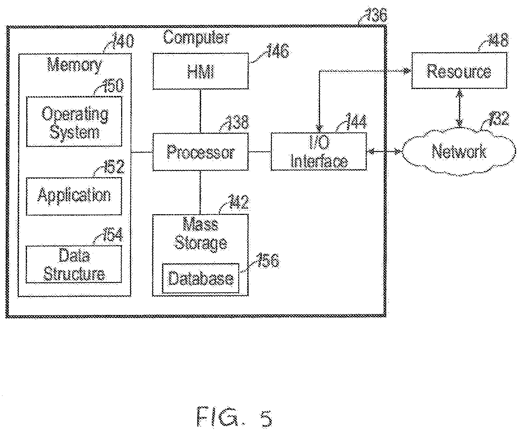

Referring now to FIG. 5, the DSPs 62 and the controller 90 of the electronic module 34 may be implemented on one or more computer devices or systems, such as exemplary computer system 140. The computer system 140 may include a processor 142, a memory 144, a mass storage memory device 146, an input/output (I/O) interface 148, and a Human Machine Interface (HMI) 150. The computer system 140 may also be operatively coupled to one or more external resources 152 via the network 132 or I/O interface 148. External resources may include, but are not limited to, servers, databases, mass storage devices, peripheral devices, cloud-based network services, or any other suitable computer resource that may be used by the computer system 140.

The processor 142 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 144. Memory 144 may include a single memory device or a plurality of memory devices including, but not limited to, read-only memory (ROM), random access memory (RAM), volatile memory, non-volatile memory, static random access memory (SRAM), dynamic random access memory (DRAM), flash memory, cache memory, or any other device capable of storing information. The mass storage memory device 46 may include data storage devices such as a hard drive, optical drive, tape drive, volatile or non-volatile solid state device, or any other device capable of storing information.

The processor 142 may operate under the control of an operating system 156 that resides in memory 144. The operating system 156 may manage computer resources so that computer program code embodied as one or more computer software applications, such as an application 158 residing in memory 144, may have instructions executed by the processor 142. In an alternative embodiment, the processor 142 may execute the application 158 directly, in which case the operating system 156 may be omitted. One or more data structures 160 may also reside in memory 144, and may be used by the processor 142, operating system 156, or application 158 to store or manipulate data.

The I/O interface 148 may provide a machine interface that operatively couples the processor 142 to other devices and systems, such as the network 132 or external resource 152. The application 158 may thereby work cooperatively with the network 132 or external resource 152 by communicating via the I/O interface 148 to provide the various features, functions, applications, processes, or modules comprising embodiments of the invention. The application 158 may also have program code that is executed by one or more external resources 152, or otherwise rely on functions or signals provided by other system or network components external to the computer system 140. Indeed, given the nearly endless hardware and software configurations possible, persons having ordinary skill in the art will understand that embodiments of the invention may include applications that are located externally to the computer system 140, distributed among multiple computers or other external resources 152, or provided by computing resources (hardware and software) that are provided as a service over the network 132, such as a cloud computing service.

The HMI 150 may be operatively coupled to the processor 142 of computer system 140 in a known manner to allow a user to interact directly with the computer system 140. The HMI 150 may include video or alphanumeric displays, a touch screen, a speaker, and any other suitable audio and visual indicators capable of providing data to the user. The HMI 150 may also include input devices and controls such as an alphanumeric keyboard, a pointing device, keypads, pushbuttons, control knobs, microphones, etc., capable of accepting commands or input from the user and transmitting the entered input to the processor 142.

A database 154 may reside on the mass storage memory device 146, and may be used to collect and organize data used by the various systems and modules described herein. The database 154 may include data and supporting data structures that store and organize the data. In particular, the database 154 may be arranged with any database organization or structure including, but not limited to, a relational database, a hierarchical database, a network database, or combinations thereof. A database management system in the form of a computer software application executing as instructions on the processor 142 may be used to access the information or data stored in records of the database 154 in response to a query, where a query may be dynamically determined and executed by the operating system 156, other applications 158, or one or more modules.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

Various program code described herein may be identified based upon the application within that it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer-readable storage medium having computer-readable program instructions thereon for causing a processor to carry out aspects of the embodiments of the invention.

Computer-readable storage media, which is inherently non-transitory, may include volatile and non-volatile, and removable and non-removable tangible media implemented in any method or technology for storage of information, such as computer-readable instructions, data structures, program modules, or other data. Computer-readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus, or another device from a computer-readable storage medium or to an external computer or external storage device via a network.

Computer-readable program instructions stored in a computer-readable medium may be used to direct a computer, other types of programmable data processing apparatus, or other devices to function in a particular manner, such that the instructions stored in the computer-readable medium produce an article of manufacture including instructions that implement the functions, acts, and/or operations specified in the flow charts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flow charts, sequence diagrams, and/or block diagrams.

In certain alternative embodiments, the functions, acts, and/or operations specified in the flow charts, sequence diagrams, and/or block diagrams may be re-ordered, processed serially, and/or processed concurrently consistent with embodiments of the invention. Moreover, any of the flow charts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of', or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A haptic device for reproducing sound, the haptic device comprising:
a main body;
at least one processor configured to generate a digital signal indicative of a specific frequency of an audio signal; and
at least one transducer in communication with the processor, the transducer configured to convert the frequency indicated by the digital signal from the at least one processor into a corresponding vibration, wherein the at least one transducer transmits the vibration to the main body of the haptic device.
